# EUROPÄISCHE PATENTANMELDUNG

(11) **EP 4 699 784 A1**
(43) Veröffentlichungstag der Anmeldung: **25.02.2026**
(21) Anmeldenummer: 24195844.6
(22) Anmeldetag: 22.08.2024
(51) Int. Cl.: B29C 64/106, B29C 64/40, B33Y 10/00, B33Y 70/00, C08L 83/04

(54) **VERFAHREN ZUR HERSTELLUNG EINES SILIKONBAUTEILS MITTELS EINER GENERATIVEN FERTIGUNG (3D DRUCK)**

(71) Anmelder: Universität Kassel (Körperschaft d. öffentlichen Rechts), 34125 Kassel (DE)
(72) Erfinder: GIESEN, Ralf-Urs, 34323 Malsfeld (DE); HEIM, Hans-Peter, 33332 Gütersloh (DE); KLIER, Kevin, 34593 Knüllwald (DE)
(74) Vertreter: Walther Bayer Faber Patentanwälte PartGmbB

(57) **Zusammenfassung**

Gegenstand der Erfindung ist ein Verfahren zur Herstellung eines Silikonbauteils (1) mittels einer generativen Fertigung, bei der wenigstens ein Flüssigsilikon (10) mit zumindest einem Druckkopf (11) Ebene für Ebene ortsaufgelöst aufgetragen und vernetzt wird, derart, dass das Silikonbauteil (1) mit wenigstens einer Hinterschneidung (12) ausgeführt wird. Um das Silikonbauteil (1) aus Flüssigsilikon (10) vorteilhaft herzustellen, sieht das Verfahren erfindungsgemäß vor, dass der Raum hinter der Hinterschneidung (12) mit einem Stützkörper (13) aus einer Mischung (M) aus Polydimethylsiloxan und Kieselsäure Ebene für Ebene erzeugt wird.

## Beschreibung

Die Erfindung betrifft ein Verfahren zur Herstellung eines Silikonbauteils mittels einer generativen Fertigung, bei der wenigstens ein Flüssigsilikonkautschuk mit zumindest einem Druckkopf Ebene für Ebene ortsaufgelöst aufgetragen und vernetzt wird, derart, dass das Silikonbauteil mit wenigstens einer Hinterschneidung ausgeführt wird.

### STAND DER TECHNIK

Flüssigsilikonkautschuk wird im Allgemeinen als LSR-Silikon bezeichnet (Liquid Silicone Rubber), und kann sowohl im Spritzgießverfahren als auch im 3D-Druck verarbeitet werden. Produkte aus Liquid Silicone Rubber sind aufgrund universeller Materialeigenschaften vielseitig einsetzbar. In der Automobilindustrie reicht es beispielsweise von Schutzmänteln für Zündkerzenstecker, Schalterabdeckungen und Regensensoren über Membranen für Zentralverriegelungen bis hin zu Scheinwerferabdichtungen, in der Elektrotechnik von Schaltmatten über Anodenkappen bis zu Elektrosteckern. Auch in der Dental- und Medizintechnik werden LSR-Bauteile etwa als Herzkatheter, Trink- und Beruhigungsschnuller, Kontaktlinsen oder Beatmungsmasken eingesetzt. Ein weiterer Schwerpunkt ist die Haushalts- und Sanitärtechnik. Dichtringe, Strahleinsätze von Duscharmaturen oder Dichtungen für Mischbatterien können aus LSR-Werkstoff bestehen. Typische Bestandteile des Silikonkautschuks sind lineare Siloxane zu etwa 70% und Füllstoffe und zu etwa 30% sowie ein geringer Anteil an Additiven.

Bei der additiven Fertigung wird hochviskoses, additionsvernetzendes 2-Komponenten-Silikon durch Materialextrusion schichtweise zusammengeführt, um Werkstücke aus 3D-Modelldaten zu erzeugen. Aufgrund der hohen Viskosität hat das Werkstück während des Druckvorgangs eine ausreichende Eigenstabilität, Hinterschneidungen sind in der Regel jedoch nicht ohne Weiteres herstellbar. Beispielsweise bietet die InnovatiQ GmbH Vorrichtungen und Verfahren zum Drucken dreidimensionaler Objekte aus einem Flüssigsilikon an.

Die additive Fertigung von Silikonelastomeren ist durch unterschiedliche Verfahren möglich. Hierfür werden Silikonkautschuke beispielsweise im LAM-Verfahren (Liquid Additive Manufacturing), im INKJET-Tröpfchenverfahren oder per Stereolithographie-Verfahren verarbeitet. Für die nachstehende Vernetzung des Kautschuks zum Elastomer gibt es ebenfalls mehrere Möglichkeiten. Am weitesten ist die UV-Vernetzung oder die thermische Vernetzung verbreitet. Für die UV-vernetzenden Kautschuke gibt es im 3D-Druck auch die Möglichkeit, Stützmaterialien bei Raumtemperaturen einzusetzen. Für thermisch vernetzende Silikonkautschuke, die erst über oder deutlich über 30°C vernetzen, ist bisweilen kein adäquates Stützmaterial bekannt und funktionsfähig. Wichtig dabei ist nämlich, dass das Stützmaterial vom eigentlichen Silikonelastomer des Silikonbauteils gelöst werden kann. Insofern ist im Stand der Technik ein Drucken von Silikonbauteilen mit Hinterschneidungen oder Überhängen mit dem LAM-Verfahren nicht möglich. Die bislang bekannten Stützmaterialien führen dazu, dass diese durch die Temperatur zur Vernetzung des Kautschuks des eigentlichen Silikonbauteils beschädigt werden. Diese verwendeten Materialien schmolzen weg, verzogen sich oder lösten sich in ihre Bestandteile auf. Insofern ergibt sich die Aufgabe der Erfindung darin, ein Stützmaterial vorzuschlagen, was auch eine thermische Vernetzung des Silikonkautschuks zum späteren Silikonelastomer des Silikonbauteils ermöglicht.

Aus der DE 10 2013 114 086 A1 ist ein Verfahren zur Herstellung eines Silikonbauteils mittels einer generativen Fertigung bekannt, bei der wenigstens ein Flüssigsilikon mit zumindest einem Druckkopf Ebene für Ebene ortsaufgelöst aufgetragen und vernetzt wird.

Die DE 10 2014 110 796 A1 offenbart ein weiteres Verfahren zum Drucken eines dreidimensionalen Objektes aus einem Flüssigsilikon, wobei das Flüssigsilikon einem Druckkopf zugeführt wird, wobei die Viskosität mit dem Druckkopf eingeregelt werden kann, sodass aus der Flüssigkeit eine geregelte Viskosität zur Bildung des Druckmaterials ausgegeben wird, um gezielte Eigenschaften im erzeugten Objekt hervorzurufen. Ein weiteres Verfahren ist aus der WO 2018/087293 A2 bekannt.

### OFFENBARUNG DER ERFINDUNG

Die Aufgabe der Erfindung besteht in der Weiterbildung eines Verfahrens zur Herstellung eines Silikonbauteils mit einem Stützmaterial eines Stützkörpers, sodass die Herstellung eines Silikonbauteils auch mit dem LAM-Verfahren und anschließendem thermischen Vernetzen möglich wird.

Diese Aufgabe wird ausgehend von einem Verfahren gemäß dem Oberbegriff des Anspruchs 1 in Verbindung mit dem kennzeichnenden Merkmalen gelöst. Vorteilhafte Weiterbildungen der Erfindung sind in den abhängigen Ansprüchen angegeben.

Die Erfindung schließt die technische Lehre ein, dass der Raum hinter der Hinterschneidung mit einem Stützkörper aus einer Mischung aus Polydimethylsiloxan und Kieselsäure Ebene für Ebene erzeugt wird.

Bei der Erfindung handelt es sich um ein Stützmaterial, das temperaturresistent ist. Dadurch wird es möglich, LSR mit Überhängen und Hinterschnitten im LAM-Verfahren zu verdrucken und thermisch zu vernetzen, und somit Elastomerbauteile herzustellen, die Hinterschneidungen aufweisen, aber nach Entfernung des Stützkörpers eine hohe Formtreue besitzen. Das Stützmaterial aus einer Mischung aus Polydimethylsiloxan und Kieselsäure kann wie auch das Flüssigsilikon zur Herstellung des eigentlichen Bauteils Ebene für Ebene verdruckt werden, und hat die gleichen viskosen Eigenschaften wie das Flüssigsilikon selbst und lässt sich mit dem gleichen Drucker und insbesondere auch mit dem gleichen Druckkopf verdrucken. Alternativ kann ein Druckkopf für das Flüssigsilikon und ein Druckkopf für die Mischung zur Herstellung des Stützkörpers vorgesehen sein.

Die Mischung kann mit 10% bis 90% Polydimethylsiloxan und 90% bis 10% Kieselsäure gebildet sein, wobei die Anteile so gewählt werden, dass sich diese jeweils zu 100% addieren. Das Polydimethylsiloxan wird insbesondere als ein nicht reaktives Polydimethylsiloxan gewählt, um die Mischung zu bilden.

Insbesondere kann die Kieselsäure als eine pyrogene Kieselsäure und/oder als eine gefällte Kieselsäure und/oder als eine Kieselerde bereitgestellt werden, um die Mischung zu bilden. Insbesondere durch die spezifischen Eigenschaften des Polydimethylsiloxan und der Kieselsäure ergibt sich die thermische Resistenz nach Erzeugung des Stützkörpers.

So kann auch die Vernetzung des aufgetragenen Flüssigsilikons unter thermischer Einwirkung vorgenommen werden, beispielsweise bei Temperaturen von über 30°C uns sogar bis zu 300°C. Die Vernetzung des aufgetragenen Flüssigsilikons kann dabei beispielsweise mittels einer Lichtbestrahlung aus einer Lichtquelle vorgenommen werden oder es sind beispielsweise auch Halogenlampen bekannt, die die entsprechenden Temperaturen in den Silikonkautschuk einbringen können, um schließlich zu einem entsprechenden Silikonelastomer zu vernetzen.

Der Vorgang des Auftrages des Flüssigsilikons kann Ebene für Ebene und das Vernetzen mittels thermischer Einwirkung kann ebenfalls Ebene für Ebene erfolgen, sodass das Auftragen und das Vernetzen jeweils abwechselnd aufeinander folgend ausgeführt wird.

Der Stützkörper kann mit demselben Druckkopf hergestellt werden, wie auch das LSR-Bauteil, oder es ist ein separater Druckkopf zur Erzeugung des Stützkörpers vorgesehen, dem die spezielle, erfindungsgemäße Mischung zugeführt wird. So kann die Erzeugung des Stützkörpers mit einem separaten Druckkopf dabei zeitgleich oder aufeinander folgend mit der Erzeugung des Silikonbauteils mit dem (Haupt-)Druckkopf Ebene für Ebene ausgeführt werden.

Schließlich kann das Verfahren vorsehen, dass der Stützkörper nach der Herstellung des Silikonbauteils aus dem Raum hinter der Hinterschneidung mittels eines Lösungsmittels ausgewaschen wird. Dieser Lösungsvorgang zur Entfernung des Stützkörpers aus der Hinterschneidung kann mit Waschbenzin erfolgen, wobei der vernetzte Silikonelastomer aus dem LSR dabei unlöslich ist und insofern erhalten bleibt. Waschbenzine werden auch als Testbenzin bezeichnet und werden durch raffinierte Benzine aus der Gruppe der Schwerbenzine gewonnen. Mit Testbenzinen lassen sich Substanzen besonders rückstandsfrei entfernen. So kann auch die Oberfläche des Silikonbauteils, die an den Stützkörper angrenzt, schließlich mit einer hohen Qualität erzeugt werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein fertiges Silikonbauteil mit einer umlaufenden, beispielhaft dargestellten Hinterschneidung,
- Figur 2: das Silikonbauteil gemäß Figur 1 mit einem noch vorhandenen Stützkörper in der umlaufenden Hinterschneidung,
- Figur 3: zwei Ansichten des Silikonbauteils jeweils mit einem Druckkopf für die Herstellung des Silikonbauteils und für die Herstellung des Stützkörpers,
- Figur 4: ein Verfahren zur Herstellung eines Silikonbauteils mit einem Druckvorgang sowie einem Vernetzungsvorgang, wobei beide Vorgänge wechselweise aufeinander folgend ausgeführt werden, aber ohne dass ein Stützkörper hergestellt wird und
- Figur 5: das erfindungsgemäße Verfahren mit einem Druckvorgang für das Silikonbauteil, einem Druckvorgang für den Stützkörper sowie einem Vernetzungsvorgang, wobei diese Vorgänge mehrfach wiederholt werden, um schließlich das Silikonbauteil zu erhalten.

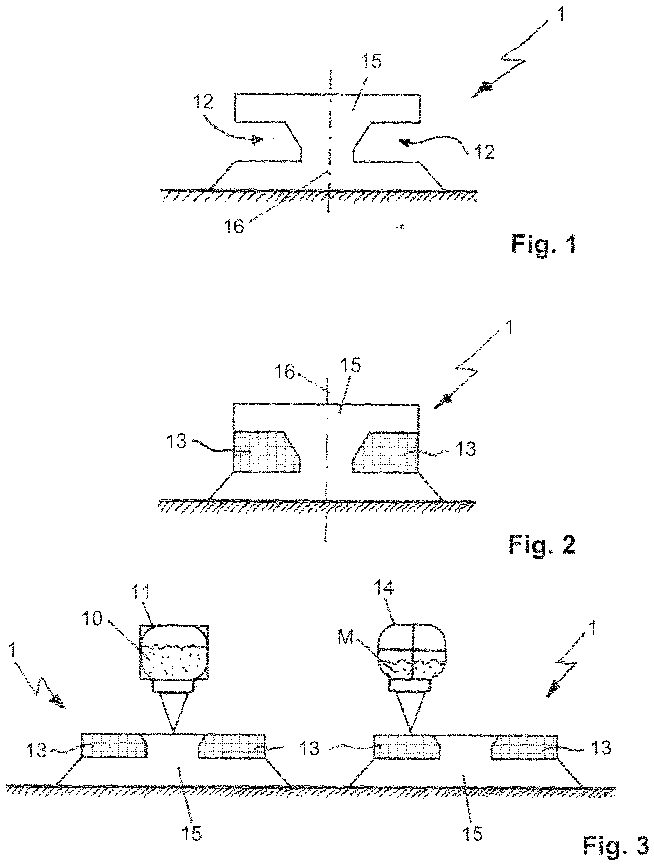

Figur 1 stellt ein Beispiel eines einfach aufgebauten Silikonbauteils 1 aus einem Silikonelastomer 15 dar, nachdem dieses im 3D-Druckverfahren hergestellt wurde und nachdem der Silikonkautschuk zu einem Silikonelastomer vernetzt wurde. Das Silikonbauteil 1 weist eine rotationssymmetrische Form auf und besitzt eine umlaufend ausgebildete Hinterschneidung 12. Die Symmetrieachse 16 deutet die rotationssymmetrische Form des Silikonbauteils 1 an.

Figur 2 zeigt das Silikonbauteil 1 aus dem Silikonelastomer 15 gemäß Figur 1, wobei der ringförmige Stützkörper 13 noch im Bereich der Hinterschneidung 12 eingesetzt ist. Der Stützkörper 13 ist aus einer Mischung aus Polydimethylsiloxan und Kieselsäure Ebene für Ebene erzeugt worden, wobei die Erzeugung Ebene für Ebene synchronisiert ist mit der Erzeugung des Silikonelastomers 15, was ebenfalls Ebene für Ebene geschieht.

Figur 3 zeigt zwei Silikonbauteile 1, die mit jeweils verschiedenen Druckköpfen 11 und 14 verbunden dargestellt sind, wobei auf der linken Seite das Silikonelastomer 15 aus dem Flüssigsilikon 10 aus dem Druckkopf 11 aufgetragen wird, und auf der rechten Seite wird die Mischung M aus dem Druckkopf 14 ausgetragen, um den Stützkörper 13 zu bilden. Die Ausgabe des Flüssigsilikons 10 und der Mischung M kann alternativ auch aus einem gemeinsamen Druckkopf erfolgen und muss nicht getrennt ausgetragen werden, und es ist zudem denkbar, dass beide Druckköpfe 11 und 14 zeitgleich Ebene für Ebene das Silikonbauteil 1 beziehungsweise den Stützkörper 13 drucken.

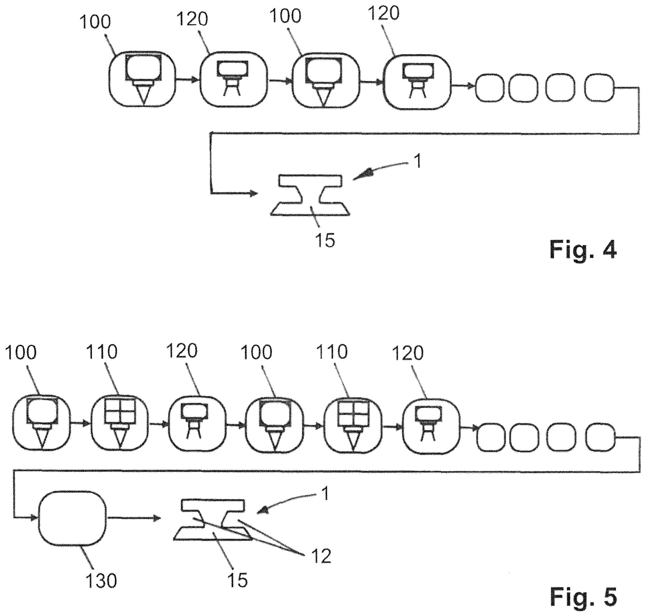

Figur 4 zeigt auf schematische Weise die konventionelle Herstellung eines Silikonbauteils 1, wobei die Schritte des Druckvorgangs 100 für das Silikonbauteil und der Vernetzungsvorgang 120 abwechselnd aufeinander folgend ausgeführt werden. Alternativ ist es denkbar, dass der Vernetzungsvorgang 120 auch nach dem Drucken des gesamten Silikonbauteils 1 erfolgt. Im Ergebnis ergibt sich ein Silikonbauteil 1 aus einem Silikonelastomer 15 mit den typischen Eigenschaften eines Silikons, wobei das Flüssigsilikon aus dem Druckkopf 11 entsprechend vernetzt und zu einem Elastomer gewandelt wurde.

Figur 5 zeigt das erfindungsgemäße Verfahren mit den periodisch aufeinander folgenden Vorgängen des Druckvorgangs 100 für das Silikonbauteil, des Druckvorgangs 110 für den Stützkörper und den Vernetzungsvorgang 120, wobei diese Vorgänge periodisch aufeinanderfolgend solange wiederholt werden, bis das Silikonbauteil 1 aus dem Silikonelastomer 15 vollständig gedruckt wurde. Auch hier ist es wieder denkbar, dass der Vernetzungsvorgang 120 einmalige nach der Ausführung des vollständigen Druckens des Silikonbauteils 1 erfolgt. Bevor das Silikonbauteil 1 fertiggestellt wird, folgt noch ein Lösungsvorgang 130, beispielsweise mit Waschbenzin oder sogenanntem Testbenzin, um den Stützkörper 13 aus der Hinterschneidung 12 herauszuwaschen.

Der Vernetzungsvorgang 120 zum Aushärten des Flüssigsilikon kann bei Temperaturen von 30°C bis 300°C oder von 50°C bis 300°C oder von 100°C bis 300°C erfolgen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Silikonbauteil
- 10: Flüssigsilikon
- 11: Druckkopf
- 12: Hinterschneidung
- 13: Stützkörper
- 14: Basiskörper
- 15: Silikonelastomer
- 16: Symmetrieachse
- 100: Druckvorgang für Silikonbauteil
- 110: Druckvorgang für Stützkörper
- 120: Vernetzungsvorgang
- 130: Lösungsvorgang
- M: Mischung

## Patentansprüche

1. Verfahren zur Herstellung eines Silikonbauteils (1) mittels einer generativen Fertigung, bei der wenigstens ein Flüssigsilikon (10) mit zumindest einem Druckkopf (11) Ebene für Ebene ortsaufgelöst aufgetragen und vernetzt wird, derart, dass das Silikonbauteil (1) mit wenigstens einer Hinterschneidung (12) ausgeführt wird, **dadurch gekennzeichnet,**
**dass** der Raum hinter der Hinterschneidung (12) mit einem Stützkörper (13) aus einer Mischung (M) aus Polydimethylsiloxan und Kieselsäure Ebene für Ebene erzeugt wird.

2. Verfahren zur Herstellung eines Silikonbauteils (1) nach Anspruch 1, **dadurch gekennzeichnet,**
**dass** die Mischung (M) mit 10% bis 90% Polydimethylsiloxan und 90% bis 10% Kieselsäure gebildet wird, wobei die Anteile so gewählt werden, dass sich diese zu 100% addieren.

3. Verfahren zur Herstellung eines Silikonbauteils (1) nach Anspruch 1 oder 2,
**dadurch gekennzeichnet,**
**dass** das Polydimethylsiloxan als ein nichtreaktives Polydimethylsiloxan gewählt wird, um die Mischung (M) zu bilden.

4. Verfahren zur Herstellung eines Silikonbauteils (1) nach einem der Ansprüche 1 bis 3,
**dadurch gekennzeichnet, dass** die Kieselsäure als eine pyrogene Kieselsäure und/oder als eine gefällte Kieselsäure und/oder als eine Kieselerde gewählt wird, um die Mischung (M) zu bilden.

5. Verfahren zur Herstellung eines Silikonbauteils (1) nach einem der vorgenannten Ansprüche,
**dadurch gekennzeichnet, dass** die Vernetzung des aufgetragenen Flüssigsilikons (10) unter thermischer Einwirkung vorgenommen wird.

6. Verfahren zur Herstellung eines Silikonbauteils (1) nach einem der vorgenannten Ansprüche,
**dadurch gekennzeichnet,**
**dass** die Vernetzung des aufgetragenen Flüssigsilikons (10) mittels einer Lichtbestrahlung aus einer Lichtquelle (13) vorgenommen wird.

7. Verfahren zur Herstellung eines Silikonbauteils (1) nach einem der vorgenannten Ansprüche,
**dadurch gekennzeichnet,**
**dass** der Vorgang des Auftrages des Flüssigsilikons (10) Ebene für Ebene und das Vernetzen mittels thermischer Einwirkung abwechselnd aufeinander folgend ausgeführt wird.

8. Verfahren zur Herstellung eines Silikonbauteils (1) nach einem der vorgenannten Ansprüche,
**dadurch gekennzeichnet,**
**dass** der Stützkörper (13) mit einem separaten Druckkopf (14) Ebene für Ebene erzeugt wird.

9. Verfahren zur Herstellung eines Silikonbauteils (1) nach Anspruch 8, **dadurch gekennzeichnet,**
**dass** die Erzeugung des Stützkörpers (13) mit dem separaten Druckkopf (14) zeitgleich oder aufeinander folgend mit der Erzeugung des Silikonbauteils (1) mit dem Druckkopf (11) Ebene für Ebene ausgeführt wird.

10. Verfahren zur Herstellung eines Silikonbauteils (1) nach einem der vorgenannten Ansprüche,
**dadurch gekennzeichnet,**
**dass** der Stützkörper (13) nach der Herstellung des Silikonbauteils (1) aus dem Raum hinter der Hinterschneidung (11) mittels eines Lösungsmittels ausgewaschen wird.
